# EUROPEAN PATENT APPLICATION

(11) **EP 2 071 438 A2**
(43) Date of publication of application: **17.06.2009**
(21) Application number: 08253994.1
(22) Date of filing: 12.12.2008
(51) Int. Cl.: G06F 3/044

(54) **Touch panel and display device using the same**

(30) Priority: 14.12.2007 CN 200710125117; 21.12.2007 CN 200710125408
(71) Applicant: Tsing Hua University, Haidian District Beijing City (CN); Hon Hai Precision Industry Co., Ltd., Tu-cheng City, Taipei Hsien (TW)
(72) Inventor: Jiang, Kai-Li, Haidian District Beijing City (CN); Liu, Liang, Haidian District Beijing City (CN); Fan, Shou-Shan, Haidian District Beijing City (CN)
(74) Representative: Stuttard, Garry Philip

(57) **Abstract**

An exemplary touch panel includes a number of capacitive sensing elements sensing multiple touch positions on the touch panel at a same time. Each of the capacitive sensing elements includes a carbon nanotube structure. A display device using the touch panel is also provided.

## Description

The present disclosure relates to touch panels and, particularly, to a carbon nanotube based touch panel and a display device using the same.

Following the advancement in recent years of various electronic apparatuses, such as mobile phones, car navigation systems and the like, toward high performance and diversification, there has been continuous growth in the number of electronic apparatuses equipped with optically transparent touch panels at the front of their respective display devices (e.g., liquid crystal panels). A user of any such electronic apparatus operates it by pressing or touching the touch panel with a finger, a pen, a stylus, or another like tool while visually observing the display device through the touch panel. Therefore, a demand exists for touch panels that provide superior visibility and reliable operation.

Up to the present time, different types of touch panels, including resistance, capacitance, infrared, and surface sound-wave types have been developed. The capacitance-type touch panel has advantages such as higher accuracy and excellent transparency, and thus has been widely used.

There are two kinds of conventional capacitance-type touch panels: the single-point capacitance-type touch panel, and the multipoint capacitance-type touch panel. Further, there are two types of the multipoint capacitance-type touch panels.

In the first type, the multipoint capacitance-type touch panel includes a glass substrate, a plurality of transparent conductive layers, a capacitive sensing circuit, and a plurality of sense traces. The transparent conductive layers and the sense traces are separately disposed on a surface of the glass substrate. The transparent conductive layers are placed at different locations on the surface of the glass substrate. Each transparent conductive layer is electrically connected to the capacitive sensing circuit by a respective sense trace. The capacitive sensing circuit includes at least one integrated circuit recording positions of the transparent conductive layers. The material of the transparent conductive layers and the sense traces is selected from a group consisting of indium tin oxide (ITO) and antimony tin oxide (ATO). Additionally, a filling layer is formed in gaps between the adjacent transparent conductive layers and the adjacent sense traces. The material of the filling layer has a refractive index similar to the material of the transparent conductive layers. As such, the touch panel with the filling layer can provide uniform transparency. Further, a protective layer is formed on the surface of the transparent conductive layer that faces away from the substrate. The material of the protective layer has insulative and transparent characteristics.

In a typical operation, an upper surface of the touch panel is pressed/touched with one or more touch tools simultaneously. The touch tools can for example be one or more fingers of a user or several users. Visual observation of a screen on the liquid crystal display device provided on a backside of the touch panel is provided. For example, in the case where a user touches the upper surface with two fingers simultaneously, due to an electrical field of the user, coupling capacitances form between the user's fingers and the transparent conductive layers. For high frequency electrical current, the coupled capacitances act as conductors, and thus the user's fingers take away currents from the touch points. Currents flowing through the capacitive sensing circuit cooperatively replace the currents lost at the touch points. Thus the positions of the touch points can be simultaneously identified by the integrated circuit of the capacitive sensing circuit.

In the second type, the multipoint capacitance-type touch panel includes a driving layer and a sensing layer. The driving layer includes a plurality of driving lines parallel to each other. The sensing layer includes a plurality of sensing lines parallel to each other. The multipoint capacitance-type touch panel further includes an insulating layer disposed between the sensing layer and the driving layer. The sensing lines and the driving lines are arranged in different planes, and the orientation of the sensing lines is perpendicular to the orientation of the driving lines. Where projections of the sensing lines intersect with the driving lines form a plurality of capacitive sensing nodes. The sensing nodes represent different coordinates on the touch panel. The driving layer is connected to a driving circuit. The driving circuit separately and alternately drives a current through each of the driving lines while all the other lines are grounded. The sensing layer is connected to a capacitive sensing circuit. The capacitive sensing circuit continuously senses the capacitance of each of the sensing lines. The material of the insulating layer is glass. The material of the driving lines and the sensing lines is selected from a group consisting of indium tin oxide (ITO) and antimony tin oxide (ATO). Additionally, a filling layer is formed in gaps between the adjacent lines. The material of the filling layer has similar refractive index as the material of the lines. As such, the touch panel with the filling layer can provide a uniform transparency.

In operation, an upper surface of the touch panel is pressed/touched with one or several touch tools, such as an electrical pen or user's fingers. And visual observation of a screen on the liquid crystal display device provided on a backside of the touch panel is provided. In use, due to an electrical field of the user, coupling capacitances between the user's fingers and the sensing nodes disturb coupling capacitances between the first conductive lines and the second conductive lines. Thus, the touch tool takes away currents from the touch points. Currents flowing through the capacitive sensing circuit cooperatively replace the currents lost at the sensing nodes. The positions of the touch points can be simultaneously identified by an integrated circuit of the capacitive sensing circuit.

In the first type and the second type multipoint capacitance-type touch panels, the transparent conductive layers (e.g., ITO layers), and the sensing lines and the driving lines (e.g., ITO lines) are generally formed by means of ion-beam sputtering, and this method is relatively complicated. Furthermore, the ITO layers and lines have generally poor mechanical durability, low chemical endurance, and uneven resistance over an entire area of the touch panel. Additionally, the ITO layers and lines have relatively low transparency. All the above-mentioned problems of the ITO layers and lines tend to yield a touch panel with realtivily low sensitivity, accuracy, and brightness.

What is needed, therefore, is to provide a durable touch panel and a display device using the same having high sensitivity, accuracy, and brightness to overcome the aforementioned shortcomings.

In one embodiment, a touch panel includes a number of capacitive sensing elements sensing multiple touch positions on the touch panel at a same time. Each of the capacitive sensing elements includes a carbon nanotube structure.

In another embodiment, a display device includes a touch panel and a display element opposite and adjacent to the touch panel. The touch panel includes a number of capacitive sensing elements sensing multiple touch positions on the touch panel at a same time. Each of the capacitive sensing elements includes a carbon nanotube structure.

Other novel features and advantages of the present touch panel and display device using the same will become more apparent from the following detailed description of exemplary embodiments, when taken in conjunction with the accompanying drawings.

Many aspects of the present touch panel and display device using the same can be better understood with reference to the following drawings. The components in the drawings are not necessarily to scale, the emphasis instead being placed upon clearly illustrating the principles of the present touch panel and display device using the same.

FIG. 1 is a top plan view of a touch panel in accordance with a first embodiment.

FIG. 2 is a side cross-sectional view of the touch panel of FIG. 1, taken along a line II-II thereof.

FIG. 3 shows a Scanning Electron Microscope (SEM) image of a carbon nanotube film used in the touch panel of FIG. 1.

FIG. 4 is a structural schematic of a carbon nanotube segment in the carbon nanotube film of FIG. 3.

FIG. 5 is essentially a schematic cross-sectional view of the touch panel of FIG. 2 used with a display element of a display device in accordance with the first embodiment.

FIG. 6 is similar to FIG. 5, but also showing other components of the display device, and showing the touch panel in use.

FIG. 7 is a top view of a partially assembled touch panel, in accordance with a second embodiment.

FIG 8 is a cross-sectional schematic view of the touch panel of FIG.7.

FIG. 9 shows a Scanning Electron Microscope (SEM) image of a non-twisted carbon nanotube wire used in the touch panel of FIG.7.

FIG. 10 shows a Scanning Electron Microscope (SEM) image of a twisted carbon nanotube wire used in the touch panel of FIG.7.

FIG. 11 is a schematic assembled cross-sectional view of the touch panel of FIG. 8 used with a display element of a display device in accordance with the second embodiment.

FIG. 12 is similar to FIG. 11, but also showing other components of the display device, and showing the touch panel in use.

Corresponding reference characters indicate corresponding parts throughout the several views. The exemplifications set out herein illustrate at least one embodiment of the present touch panel and display device using the same, in at least one form, and such exemplifications are not to be construed as limiting the scope of the invention in any manner.

Reference will now be made to the drawings to describe, in detail, embodiments of the present touch panel and display device using the same.

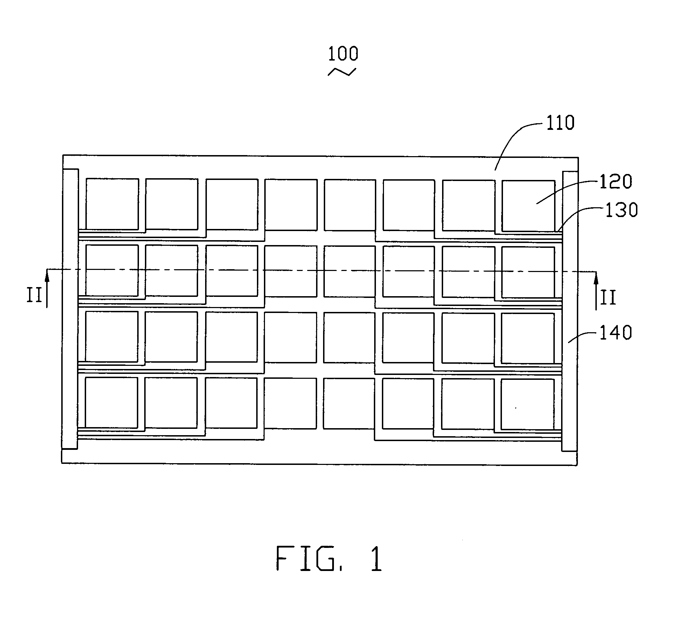

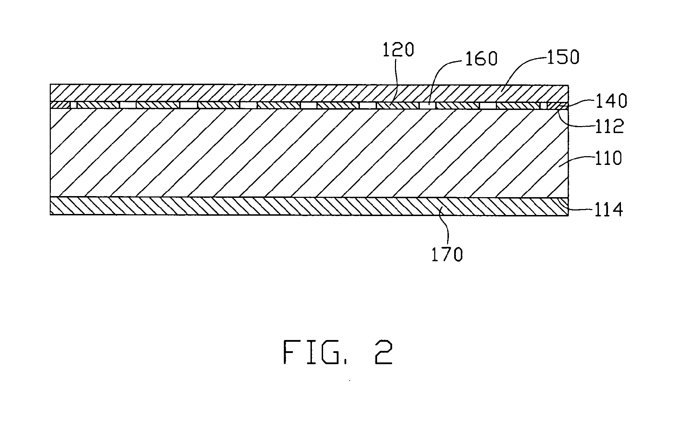

Referring to FIG. 1 and FIG. 2, in a first embodiment, a touch panel 100 includes a substrate 110, a plurality of transparent conductive layers 120, a plurality of conductive wires 130, at least one capacitive sensing circuit 140, a transparent protective film 150, and a filling layer 160. The substrate 110 has a first surface 112 and a second surface 114 at opposite top and bottom sides thereof respectively. The transparent conductive layers 120 and the conductive wires 130 are disposed on the first surface 112 of the substrate 110. All the transparent conductive layers 120 are spaced apart from each other and electrically isolated from each other. That is, transparent conductive layers 120 are arranged in a matrix with gaps defined therebetween. In the illustrated embodiment, there are two capacitive sensing circuits 140, which are positioned at opposite ends of the first surface 112 respectively. The conductive wires 130 are positioned in the gaps between the transparent conductive layers 120, and respectively connect the transparent conductive layers 120 to the corresponding capacitive sensing circuits 140. The filling layer 160 is formed in the gaps between the transparent conductive layers 120 and the conductive wires 130. The transparent protective film 150 covers the transparent conductive layers 120, the conductive wires 130, and the filling layer 160.

The substrate 110 is a transparent plate and can be made of rigid material such as glass, quartz, or diamond, or flexible material such as polymer or resin. When the substrate 110 is flexible, the material thereof can be selected from a group consisting of polycarbonate (PC), polymethyl methacrylate (PMMA), polyethylene terephthalate (PET), polyether sulfone (PES), polyvinyl chloride (PVC), benzocyclobutene (BCB), polyester, and acrylic resin. A thickness of the substrate 110 can be from about 1 millimeter to about 1 centimeter. Here, the substrate 110 is made of glass, and the thickness thereof is about 2 millimeters. Understandably, the substrate 110 is used to support the transparent conductive layers 120. Thus the material of the substrate 110 is not restricted to the above-mentioned materials, and can be any other suitable transparent material.

It is to be noted that the shape of the substrate 110 is chosen according to the requirements of the touch field (i.e., sensing area) of the touch panel 100. A shape of the sensing area of the touch panel 100 can be arbitrarily set (e.g., a rectangular area, or a triangular area). Here, the shapes of the touch field and the substrate 110 are both rectangular.

The transparent conductive layers 120 can be arranged randomly or orderly on the first surface 112 of the substrate 110. Each transparent conductive layer 120 corresponds to a reference point on the touch panel 100. When the transparent conductive layers 120 are orderly, they can be positioned according to any particular desired pattern, with their positions depending on the coordinate system used. For example, the transparent conductive layers 120 can be arranged in an array of rows and columns for a Cartesian coordinate system. In another example, the transparent conductive layers 120 can be arranged in an array of concentric and radial segments for a polar coordinate system. Shapes of the transparent conductive layers 120 can be arbitrarily set, such as squares, circles, ovals, triangles, rectangles, and polygons. The shapes and sizes of the transparent conductive layers 120 can be the same or different, according to actual needs. It is to be understood that in order to improve the resolution of the touch panel 100, the number of transparent conductive layers 120 is large, while the sizes of the transparent conductive layers 120 are small. Typically, the sizes of the transparent conductive layers 120 are smaller than the size of a fingertip. For example, a uniform size of the transparent conductive layers 120 can be on the order of 4 to 5 square millimeters. It is to be noted that the shapes of the transparent conductive layers 120 are generally chosen to maximize the sensing area and to minimize optical differences between the gaps and the transparent conductive layers 120. Typically, widths of the gaps between the transparent conductive layers 120 are from about 1 micron to about 5 millimeters.

Here, the transparent conductive layers 120 are square, and are arranged in an array of rows and columns. The squares are about 5 millimeters long on each side. The gaps between adjacent columns of the transparent conductive layers 120 are from about 1 micron to about 5 millimeters. The gaps between adjacent rows of the transparent conductive layers 120 are about 100 microns.

Each transparent conductive layer 120 includes the carbon nanotube layer. The carbon nanotube layer is formed by a plurality of carbon nanotubes, ordered or otherwise, and has a substantially uniform thickness. The carbon nanotube layer can include one transparent carbon nanotube film, or a plurality of coplanar or stacked transparent carbon nanotube films. A thickness of the carbon nanotube layer can be arbitrary set to any thickness that provides acceptable transparency. In the following description, unless the context indicates otherwise, it will be assumed that the carbon nanotube layer of each transparent conductive layer 120 includes only one carbon nanotube film.

The carbon nanotubes in the carbon nanotube film are uniformly distributed. The carbon nanotube film can be an ordered film or a disordered film. The ordered carbon nanotube film includes ordered carbon nanotubes. The disordered carbon nanotube film includes disordered carbon nanotubes. The "order" means the carbon nanotubes are primarily oriented along a same direction or several determined directions; the "disorder" means the align directions of the carbon nanotubes are random. Thus, in the disordered carbon nanotube film, the numbers of the carbon nanotubes aligned in every direction are substantially equal. In the disordered film, the carbon nanotubes are randomly entangled with each other, or randomly arranged and parallel to a surface of the disordered carbon nanotube film, and thus, the disordered carbon nanotube film is isotropic.

When the carbon nanotube layer includes some ordered carbon nanotube films stacked with each other, the ordered carbon nanotube films can be aligned along a same direction or aligned along different directions. Thus, an angle α between the aligned directions of the carbon nanotubes in each pair of adjacent carbon nanotube films is in the range 0≦ α ≦ 90°.

A length and a width of the carbon nanotube film can be arbitrarily set as desired. A thickness of the carbon nanotube film is in an approximate range from 0.5 nanometers to 100 micrometers. The carbon nanotubes in the carbon nanotube film can include single-walled carbon nanotubes, double-walled carbon nanotubes, or multi-walled carbon nanotubes. Diameters of the single-walled carbon nanotubes, the double-walled carbon nanotubes, and the multi-walled carbon nanotubes can, respectively, be in the approximate range from 0.5 to 50 nanometers, 1 to 50 nanometers, and 1.5 to 50 nanometers.

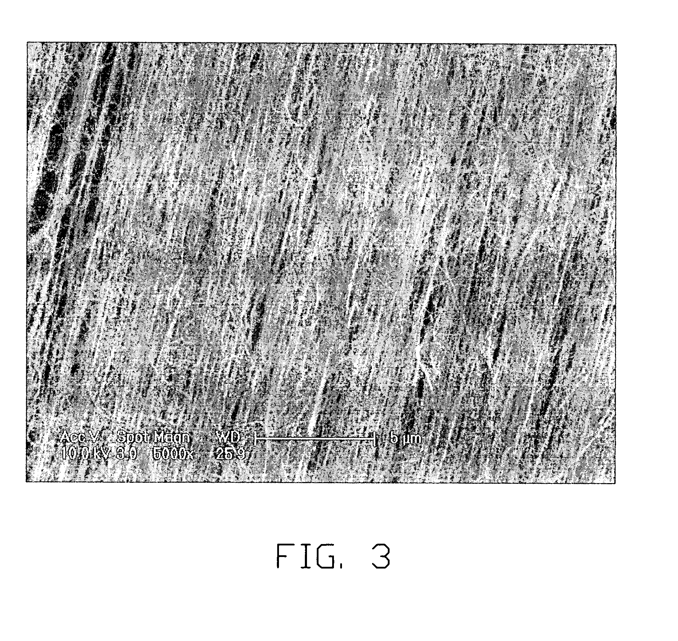

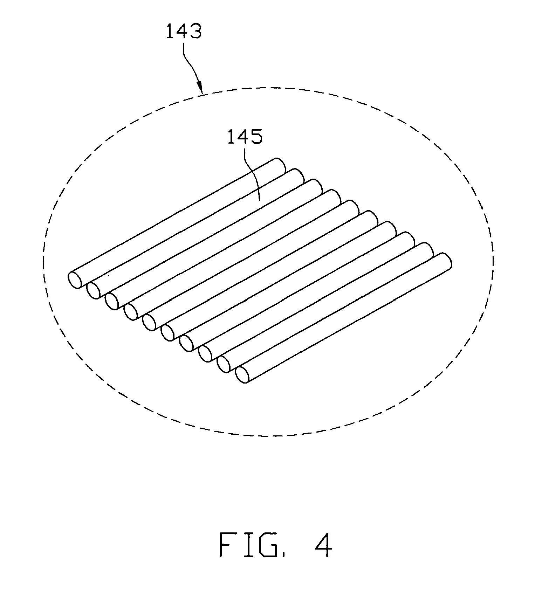

Here, the ordered carbon nanotube film is drawn from a super-aligned carbon nanotube array. The carbon nanotube film is free-standing. Referring to FIG. 3 and FIG. 4, the carbon nanotube film includes a plurality of successive and oriented carbon nanotubes joined end to end by van der Waals attractive force. Specifically, the carbon nanotube film includes a plurality of successively oriented carbon nanotube segments 143 joined end-to-end by van der Waals attractive force therebetween. Each carbon nanotube segment 143 includes a plurality of parallel carbon nanotubes 145, and combined by van der Waals attractive force therebetween. The carbon nanotube segments 143 can vary in width, thickness, uniformity and shape. The carbon nanotubes 145 in each carbon nanotube segment 143 are also oriented along a preferred orientation. A thickness of the carbon nanotube film ranges from about 0.5 nanometers to about 100 microns. A width of the carbon nanotube film depends on the size of the carbon nanotube array, and the amount of the carbon nanotubes in the carbon nanotube array which the carbon nanotube film is drawn from. Typically, the length of the carbon nanotube film can range from 1 micron to 100 meters (or above), the width of the carbon nanotube film can range from 0.5 nanometers to 10 centimeters. To be used in the touch panel, the large area carbon nanotube film can be cut into small pieces with an area of about 1 square millimeter to 1 square centimeter. The carbon nanotube film is flexible and has a relatively high toughness due to the van der Walls attractive force between the carbon nanotubes. The carbon nanotubes in the carbon nanotube film are uniformly arranged and parallel to a surface of the carbon nanotube film, and thus, the carbon nanotube film has excellent resistance distribution and light transparence.

A method for fabricating the above-described carbon nanotube film includes: (a) providing an array of carbon nanotubes, here, a super-aligned array of carbon nanotubes; and (b) pulling out the carbon nanotube film from the array of carbon nanotubes, by using a tool.

In step (a), a given super-aligned array of carbon nanotubes can be formed by : (a1) providing a substantially flat and smooth substrate; (a2) forming a catalyst layer on the substrate; (a3) annealing the substrate with the catalyst layer in air at a temperature from about 700°C to about 900°C for about 30 to about 90 minutes; (a4) heating the substrate with the catalyst layer to a temperature from about 500°C to about 740°C in a furnace with a protective gas therein; and (a5) supplying a carbon source gas to the furnace for about 5 to about 30 minutes and growing the super-aligned array of carbon nanotubes on the substrate.

In step (a1), the substrate can be a P-type silicon wafer, an N-type silicon wafer, or a silicon wafer with a film of silicon dioxide thereon, with a 4-inch P-type silicon wafer used here.

In step (a2), the catalyst can be made of iron (Fe), cobalt (Co), nickel (Ni), or any alloy thereof.

In step (a4), the protective gas can be made up of at least one of nitrogen (N₂), ammonia (NH₃), and a noble gas. In step (a5), the carbon source gas can be a hydrocarbon gas, such as ethylene (C₂H₄), methane (CH₄), acetylene (C₂H₂), ethane (C₂H₆), or any combination thereof.

The super-aligned array of carbon nanotubes can have a height of about 50 microns to about 5 millimeters and include a plurality of parallel carbon nanotubes approximately perpendicular to the substrate. The carbon nanotubes in the array can be single-walled carbon nanotubes, double-walled carbon nanotubes, or multi-walled carbon nanotubes. Diameters of the single-walled carbon nanotubes are in the approximate range from 0.5 nanometers to 50 nanometers. Diameters of the double-walled carbon nanotubes are in the approximate range from 1 nanometer to 50 nanometers. Diameters of the multi-walled carbon nanotubes are in the approximate range from 1.5 nanometers to 50 nanometers.

The super-aligned array of carbon nanotubes formed under such conditions is essentially free of impurities such as carbonaceous or residual catalyst particles. The carbon nanotubes in the super-aligned array are closely packed together by van der Waals attractive force.

In step (b), the carbon nanotube film, can be formed by : (b1) selecting one or more carbon nanotubes having a predetermined width from the super-aligned array of carbon nanotubes; and (b2) pulling the carbon nanotubes to form carbon nanotube segments that are joined end to end at an uniform speed to achieve a uniform carbon nanotube film.

In step (b1), the carbon nanotube segments having a predetermined width can be selected by using a tool such as an adhesive tape, a tweezers, or a clamp to contact the super-aligned array.

In step (b2), the pulling direction is substantially perpendicular to the growing direction of the super-aligned array of carbon nanotubes. Each carbon nanotube segment includes a plurality of parallel carbon nanotubes.

More specifically, during the pulling process, as the initial carbon nanotube segments are drawn out, other carbon nanotube segments are also drawn out end to end due to van der Waals attractive force between ends of adjacent segments. This process of drawing ensures a substantially continuous and uniform carbon nanotube film having a predetermined width can be formed. The carbon nanotube film includes a plurality of carbon nanotubes joined ends to ends. The carbon nanotubes in the carbon nanotube film are all substantially parallel to the pulling/drawing direction of the carbon nanotube film, and the carbon nanotube film produced in such manner can be selectively formed to have a predetermined width. The carbon nanotube film formed by the pulling/drawing method has superior uniformity of thickness and conductivity over a typical disordered carbon nanotube film. Further, the pulling/drawing method is simple, fast, and suitable for industrial applications.

The width of the carbon nanotube film depends on a size of the carbon nanotube array. The length of the carbon nanotube film can be arbitrarily set, as desired. When the substrate is a 4-inch P-type silicon wafer as in the first embodiment, the width of the carbon nanotube film is in an approximate range from 0.5 nanometers to 10 centimeters, and the thickness of the carbon nanotube film is in an approximate range from 0.5 nanometers to 100 microns. The length of the carbon nanotube film can be larger than 100 meters.

It is noted that because the carbon nanotubes in the super-aligned carbon nanotube array have a high purity and a high specific surface area, the carbon nanotube film is adherent in nature. As such, the carbon nanotube film can be directly adhered to the first surface 112 of the substrate 110 without the use of an adhesive. In the alternative, other bonding means can be applied.

It is to be understood that when the size of the as-formed carbon nanotube film is larger than the size of each transparent conductive layers 120, the carbon nanotube film can be cut into needed sizes and shapes by a laser cutting process performed in air. The cutting process can be performed before or after the adhering step. For example, after being adhered on the substrate 110, the carbon nanotube film can be cut and formed into a plurality of transparent conductive layers 120. In the following description, unless the context indicates otherwise, it will be assumed that a single carbon nanotube film is adhered on the substrate 110 prior to a cutting step.

Once the carbon nanotube film is adhered to the first surface 112 of the substrate 110, the carbon nanotube film can be treated with an organic solvent. Specifically, the organic solvent can be applied onto the carbon nanotube film to soak the entire surface of the carbon nanotube film. Specifically, the carbon nanotube film can be treated by applying organic solvent to the carbon nanotube film to soak the entire surface of the carbon nanotube film. The organic solvent is volatile and can be selected from the group consisting of ethanol, methanol, acetone, dichloroethane, chloroform, any appropriate mixture thereof. Here, the organic solvent is ethanol. After being soaked by the organic solvent, microscopically, carbon nanotube strings will be formed by adjacent carbon nanotubes in the carbon nanotube film, that are able to do so, bundling together, due to the surface tension of the organic solvent. In one aspect, part of the carbon nanotubes in the untreated carbon nanotube film that are not adhered on the substrate will come into contact with the first surface 112 of the substrate 110 after the organic solvent treatment due to the surface tension of the organic solvent. Then the contacting area of the carbon nanotube film with the substrate will increase, and thus, the carbon nanotube film can firmly adhere to the first surface 112 of the substrate 110. In another aspect, due to the decrease of the specific surface area via bundling, the mechanical strength and toughness of the carbon nanotube film are increased and the coefficient of friction of the carbon nanotube films is reduced. Macroscopically, the film will be an approximately uniform carbon nanotube film. After such treatment with organic solvent, the carbon nanotube film can be cut and formed into a plurality of transparent conductive layers 120 (see above). Alternatively, the carbon nanotube film can be cut and formed into a plurality of transparent conductive layers 120 prior to treatment with organic solvent.

Unlike previous methods for making an ITO film, the present method does not require a vacuum environment and heat processing, due to the carbon nanotube film being obtained by being pulled out from an array of carbon nanotubes. Thus, the carbon nanotube layers formed of one or more carbon nanotube films and used in the transparent conductive layers 120 have the advantage of being low cost, environmentally safe, and energy efficient.

The conductive wires 130 are positioned in the gaps. In the illustrated embodiment, the conductive wires 130 are routed from the transparent conductive layers 120 to the corresponding capacitive sensing circuits 140 positioned at the opposite ends of the touch panel 100. According to this arrangement, the conductive wires 130 can be routed in a variety of ways. Typically, to reduce the sizes of the gaps between the adjacent transparent conductive layers 120 and the resistances of the conductive wires 130, the conductive wires 130 are routed along paths between the transparent conductive layers 120 and the capacitive sensing circuits 140 whereby minimal distances are traversed. The conductive wires 130 can be formed from ITO, ATO, conductive resin, and any other suitable transparent conductive material. The conductive wires 130 are formed on the first surface 112 of the substrate 110 using any suitable patterning technique (e.g., deposition, etching, or printing). A diameter of the conductive wires 130 is less than 400 microns. Here, the conductive wires 130 are formed by carbon nanotube wires or strip-shaped carbon nanotube films. The strip-shaped carbon nanotube films is the above-described carbon nanotube film with relatively narrow width (e.g., from about 0.5 nanometers to 400 microns). The method for fabricating the carbon nanotube wires is similar to the method for fabricating the above-described carbon nanotube film. A diameter of each of the carbon nanotube wires is in the approximate range from 0.5 nanometers to 400 microns. The carbon nanotube wires include a plurality of carbon nanotubes joined end to end. It is noted that because the carbon nanotubes in the super-aligned carbon nanotube array have a high purity and a high specific surface area, the carbon nanotube wires are adherent in nature. As such, the carbon nanotube wires can be directly adhered to the first surface 112 of the substrate 110.

Here, two capacitive sensing circuits 140 are respectively disposed on a first end and a second end of the first surface 112 of the substrate 110. The first and second ends are opposite ends of the first surface 112. The conductive wires 130 are disposed in gaps between rows of the transparent conductive layers 120. The transparent conductive layers 120 closer to the first end are respectively connected to the capacitive sensing circuit 140 on the first end. The transparent conductive layers 120 closer to the second side are respectively connected to the capacitive sensing circuit 140 on the second end. In other embodiments, the at least one capacitive sensing circuit 140 can be positioned at least one edge and/or corner of the touch panel 100 or in any acceptable location. For example, several capacitive sensing circuits 140 can be positioned on the edges or corners of the touch panel 100 to provide minimum distances between the transparent conductive layers 120 and the capacitive sensing circuits 140.

Each capacitive sensing circuit 140 includes at least one integrated circuit (IC, not shown). The IC stores the position coordinates of the corresponding transparent conductive layers 120, and measures the capacitive changes at the corresponding transparent conductive layers 120. Further, the IC can transmit information on the capacitive changes and the corresponding position coordinates to other electronic devices (see below).

Further, the gaps between the transparent conductive layers 120 and the conductive wires 130 are air gaps unless or until they are filled. The gaps do not have the same refractive index and transmissivity as the transparent conductive layers 120 and the conductive wires 130. Thus, the filling layer 160 is formed in the gaps between the transparent conductive layers 120 and the conductive wires 130 to improve the visual appearance of the touch panel 100. The filling layer 160 is formed of a material with a refractive index and a transmissivity similar to that of the transparent conductive layers 120 and the conductive wires 130.

Further, in order to prolong operational life span and restrict coupling capacitances of the touch panel 100, the transparent protective film 150 is disposed on the transparent conductive layers 120 and the filling layer 160. The transparent protective film 150 can be a plastic film and receives a surface hardening treatment to protect the transparent conductive layers 120 and the filling layer 160 from being scratched when in use. The transparent protective film 150 can be adhered to the transparent conductive layers 120 and the filling layer 160; or can be combined with the transparent conductive layers 120 and the filling layer 160 by a hot-pressing method. The material of the transparent protective film 150 can be selected from a group consisting of silicon nitride, silicon dioxide, BCB, polyester, acrylic resin, PET, and any combination thereof.

Here, the material of the transparent protective film 150 is PET. The hardness and thickness of the transparent protective film 150 are selected according to practical needs. The transparent protective film 150 is adhered to the transparent conductive layers 120 and the filling layer 160.

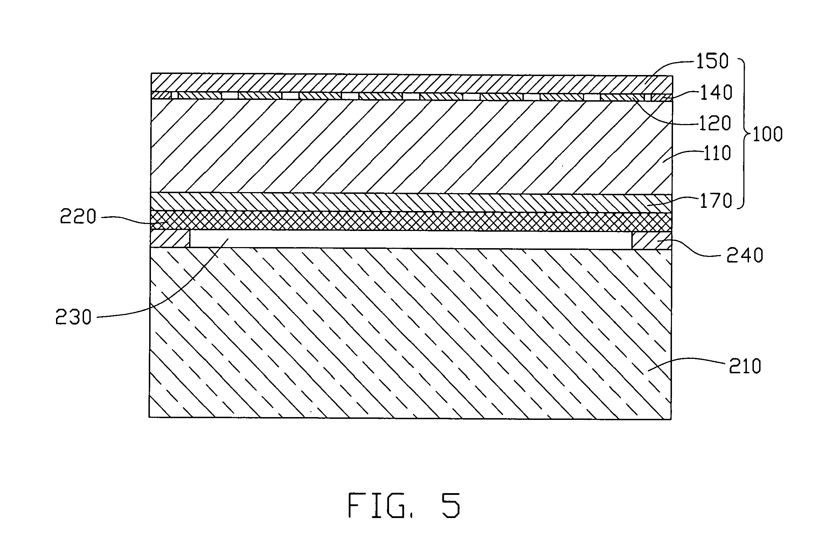

Referring also to FIG. 5, the touch panel 100 can further include a shielding layer 170 disposed on the second surface 114 of the substrate 110. The material of the shielding layer 170 can be ITO film, ATO film, conductive resin film, carbon nanotube film, or another suitable conductive film. In the first embodiment, the shielding layer 170 is the carbon nanotube film. The carbon nanotube film includes a plurality of carbon nanotubes, and the orientations of the carbon nanotubes therein can be arbitrarily determined. Here, the carbon nanotubes in the carbon nanotube film of the shielding layer 170 are arranged along a same direction (i.e., the carbon nanotube film is the ordered carbon nanotube film). The carbon nanotube film is connected to ground and acts as shielding, thus enabling the touch panel 100 to operate without interference (e.g., electromagnetic interference).

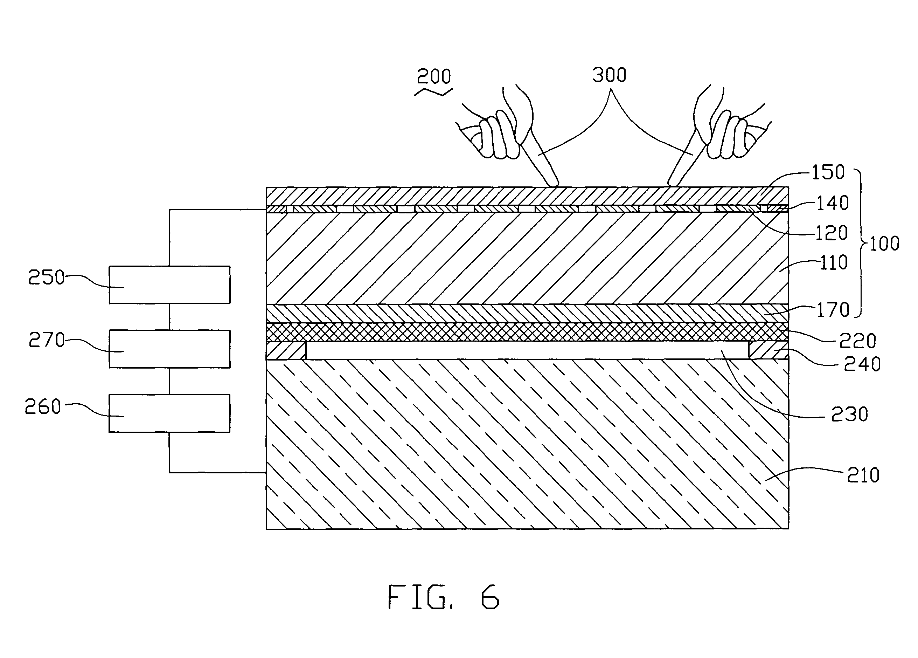

Referring to FIGS. 5 and 6, an exemplary display device 200 includes the touch panel 100, a display element 210, a touch panel controller 250, a central processing unit (CPU) 270, and a display element controller 260. The touch panel 100 is opposite and adjacent to the display element 210. The touch panel 100 can be spaced from the display element 210 or installed directly on the display element 210. The touch panel 100 is connected to the touch panel controller 250 by a circuit external to the touch panel 100. The touch panel controller 250, the CPU 270 and the display element controller 260 are electrically connected. In particular, the CPU 270 is connected to the display element controller 260 to control the display element 210.

The display element 210 can be, e.g., a conventional display such as a liquid crystal display, field emission display, plasma display, electroluminescent display, vacuum fluorescent display, cathode ray tube, or another display device, or a flexible display such as an e-paper (i.e., a microencapsulated electrophoretic display), a flexible liquid crystal display, a flexible organic light emitting display (OLED), or any other flexible display.

When the shielding layer 170 is disposed on the second surface 114 of the substrate 110, a passivation layer 220 is disposed on a surface of the shielding layer 170 that faces away from the substrate 110. The material of the passivation layer 220 can be selected from a group consisting of silicon nitride, silicon dioxide, benzocyclobutene, polyester, acrylic resin, polyethylene terephthalate, and any combination thereof. The passivation layer 220 can be spaced at a distance from the display element 210, or can be directly installed on the display element 210. When the passivation layer 220 is spaced at a distance from the display element 210, understandably, two or more spacers 240 can be used. A gap 230 is provided between the passivation layer 220 and the display element 210. The passivation layer 220 protects the shielding layer 170 from chemical damage (e.g., humidity of the surrounding) or mechanical damage (e.g., scratching during fabrication of the touch panel).

In operation, an upper surface of the touch panel 100 is pressed or touched with one or more touch tools 300 simultaneously. The touch tools 300 can for example be one or more fingers of a user. For example, in the case where a user touches the upper surface with two fingers simultaneously, due to an electrical field of the user, coupling capacitances form between the user's fingers and the corresponding transparent conductive layers 120. For high frequency electrical current, the coupled capacitances are conductors, and thus the user's fingers take away currents from the touch points. Currents flowing through either or both of the corresponding capacitive sensing circuits 140 cooperatively replace the currents lost at the touch points. The position coordinates of the touch points can be identified by the IC of either or both (simultaneously) of the corresponding capacitive sensing circuits 140. This information is transmitted in analog form to the touch panel controller 250. The touch panel controller 250 converts the analog capacitive changes and position coordinates to digital data. The CPU 270 receives the digital data, and sends corresponding commands to the display element controller 260 to control the display element 210 accordingly.

The carbon nanotube layers provided in the first embodiment have superior properties, such as excellent toughness, high mechanical strength, and uniform conductivity. Thus, the touch panel 100 and the display device 200 are durable and highly conductive. In addition, the pulling method for fabricating the carbon nanotube films for the carbon nanotube layers is simple, and the adhesive carbon nanotube films can be disposed on the substrate 110 directly without the use of an adhesive. As such, the method for fabricating the carbon nanotube films is suitable for the mass production of touch panels and display devices using the same, and reduces the costs thereof. Furthermore, the carbon nanotube films have high transparency, thereby promoting improved brightness of the touch panel 100 and the display device 200. Moreover, since the carbon nanotubes have excellent electrical conductivity properties, the carbon nanotube layers formed by the plurality of carbon nanotubes have a uniform resistance distribution. Thus the touch panel 100 and the display device 200 adopting the carbon nanotube layers have improved sensitivity and accuracy.

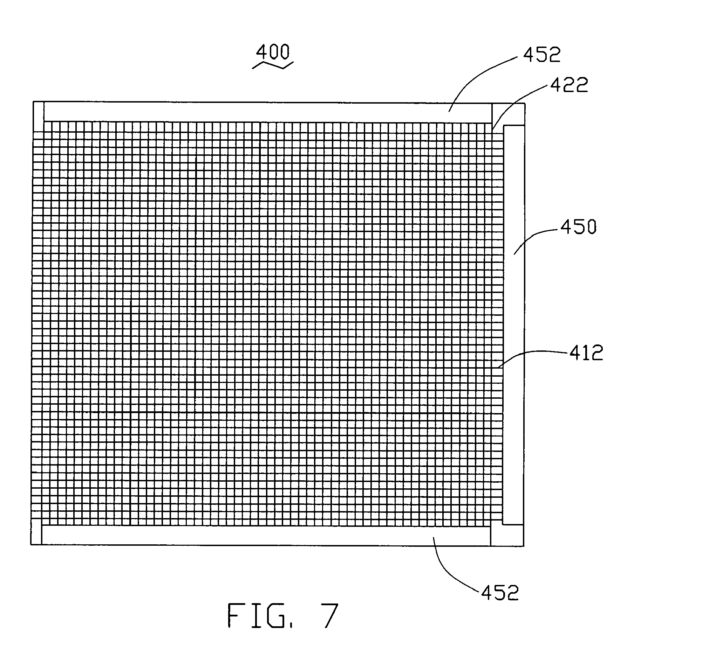

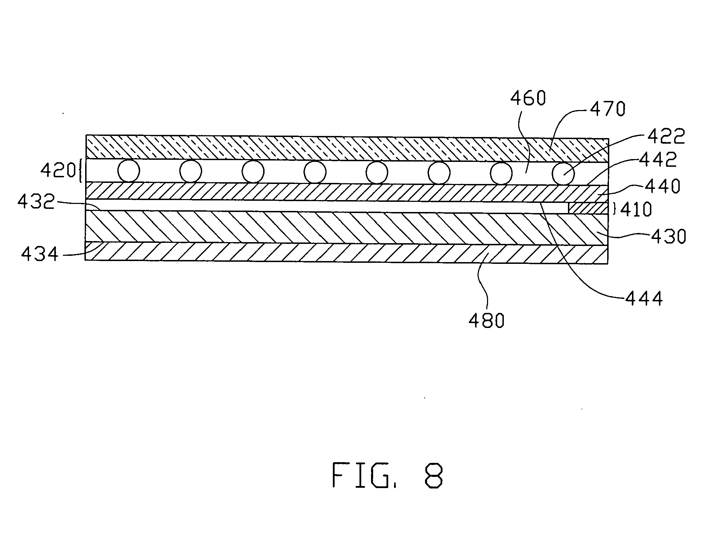

Referring to FIG. 7 and FIG. 8, in a second embodiment, a touch panel 400 includes a first conductive layer 410, a second conductive layer 420 spaced apart from and opposite to the first conductive layer 410, and a capacitive sensing circuit 450. The first conductive layer 410 includes a plurality of first conductive lines 412. The second conductive layer 420 includes a plurality of second conductive lines 422. The first conductive lines 412 and the second conductive lines 422 are disposed in two separate planes and where the second conductive lines 422 pass over the first conductive lines 412 they are considered to be spatially intersecting with each other. The plurality of first conductive lines 412 are connected to the capacitive sensing circuit 450.

The touch panel 400 can further includes a first substrate 430 and a second substrate 440. The first substrate 430 is disposed opposite to the second substrate 440. The first substrate 430 includes a first surface 432 and a second surface 434. The second substrate 440 includes a third surface 442 and a fourth surface 444. The first surface 432 faces the fourth surface 444. The first conductive layer 410 is disposed between the first surface 432 and the fourth surface 444. The second conductive layer 420 is disposed on the third surface 442. The touch panel 400 can further includes a protective layer 470 covered the second conductive layer 420.

The first substrate 430 and the second substrate 440 are transparent plates and can be made of rigid material such as glass, quartz, diamond, or flexible material such as polymer, or resin. When it is desired that the first substrate 430 and the second substrate 440 be flexible, the material of the first substrate 430 and the second substrate 440 can be selected according to actual needs, and can be the same with the material of the substrate 110 of the first embodiment. A thickness of the first substrate 430 and the second substrate 440 can be in the approximate range from 0.05 millimeters to 1 centimeter. Here, the first substrate 430 and the second substrate 440 are made of glass. The thickness of the first substrate 430 is about 1 to 5 millimeters. The thickness of the second substrate 440 is about 0.3 to 0.5 millimeters. Understandably, the first substrate 430 and the second substrate 440 are used to support the first conductive layer 410 and the second conductive layer 420. Thus, the material of the first substrate 430 and the second substrate 440 should not be restricted to the above-mentioned materials but any other suitable transparent materials.

It is to be understood that the second substrate 440 is optional and configured for separating the first conductive layer 410 and the second conductive layer 420. In other embodiments, the touch panel 400 can include a framework spaced apart from the first conductive layer 410, the second substrate 440 omitted, and the plurality of second conductive lines 422 supported by the framework.

It is to be noted that the shape of the first substrate 430 is the same as the second substrate 440 and is chosen according to the requirements of the touch field (i.e., sensing area) of the touch panel 400. A shape of the sensing area of the touch panel 400 can be arbitrarily set (e.g. a rectangular area, or a triangular area). In the second embodiment, the shapes of the touch field and the substrates 430, 440 are rectangular.

The first conductive lines 412 and the second conductive lines 422 are spaced apart, and as such, electrically insulated from each other. The distribution of the first conductive lines 412 and the second conductive lines 422 can be set in any desirable patterns. In this case, the position of the first conductive lines 412 and the second conductive lines 422 depends on the coordinate system used. For example, the first conductive lines 412 and the second conductive lines 422 can be placed in rows and columns for Cartesian coordinates, or concentrically and radially for polar coordinates. When using rows and columns, the rows and columns may be placed at various angles relative to one another. In a suitable embodiment, the first conductive lines 412 and the second conductive lines 422 can be vertical, horizontal, or diagonal. The spatial intersections of the first conductive lines 412 and the second conductive lines 422 form a plurality of capacitive sensing nodes. The sensing nodes represent different coordinates on the touch panel 400. Here, the first conductive lines 412 are disposed along a first direction and parallel to one another. The second conductive lines 422 are disposed along a second direction and parallel to one another. An angle α formed between the first direction and the second direction is in an approximate range from 0° to 90°. Here, the angle α is equal to 90° (i.e., the first direction is perpendicular to the second direction.

The number of the first conductive lines 412 and the second conductive lines 422, and distances between two adjacent first conductive lines 412 or two adjacent second conductive lines 422 are dependent on a desired resolution of the touch panel 400. The number of the first conductive lines 412 and the second conductive lines 422 can be identical or different. In the present embodiment, the distance between two adjacent first conductive lines 412 and two adjacent second conductive lines 422 is anywhere from 1 micron to 5 millimeters.

It is to be understood that the positioning of the first conductive lines 412 and the second conductive lines 422 is not limited to the above-mentioned configurations. The only need is to insure spatial intersections of the first conductive lines 412 and the second conductive lines 422 to form a plurality of capacitive sensing nodes. In other embodiments, the first conductive lines 412 and the second conductive lines 422 can be arranged in irregular curves rather than straight lines. It is to be understood that the positioning of the first conductive lines 412 and the second conductive lines 422 is related to the shape of the sensing area of the touch panel 400.

At least one line of the first conductive lines 412 and the second conductive lines 422 is the carbon nanotube wire-like structure or the strip-shaped carbon nanotube film.

The carbon nanotube wire-like structure includes one or a plurality of carbon nanotube wires parallel to each other or twisted together. When the carbon nanotube wires are parallel to each other, the carbon nanotube wire-like structure is in a non-twisted shape. When the carbon nanotube wires are twisted together, the carbon nanotube wire-like structure is in a twisted shape. The carbon nanotube wire-like structure includes a plurality of carbon nanotubes joined end to end by van der Waals attractive force therebetween.

Referring to FIG. 3 and FIG. 4, each carbon nanotube wire is formed by the carbon nanotube film drawn from the super-aligned carbon nanotube array in the first embodiment. The carbon nanotube wire comprises a plurality of successively oriented carbon nanotube segments 143 joined end-to-end by van der Waals attractive force therebetween. Each carbon nanotube segment 143 includes a plurality of carbon nanotubes 145 parallel to each other, and combined by van der Waals attractive force therebetween. The carbon nanotube segments 143 can vary in width, thickness, uniformity and shape.

The carbon nanotube wire used can be twisted or non-twisted. The non-twisted carbon nanotube wire is formed by treating the drawn carbon nanotube film with an organic solvent. Specifically, the carbon nanotube film is treated by applying the organic solvent to the carbon nanotube film to soak the entire surface of the carbon nanotube film. After being soaked by the organic solvent, the adjacent paralleled carbon nanotubes in the carbon nanotube film will bundle together, due to the surface tension of the organic solvent when the organic solvent volatilizing, and thus, the carbon nanotube film will be shrunk into non-twisted carbon nanotube wire. The organic solvent is volatile, such as ethanol, methanol, acetone, dichloroethane, or chloroform.

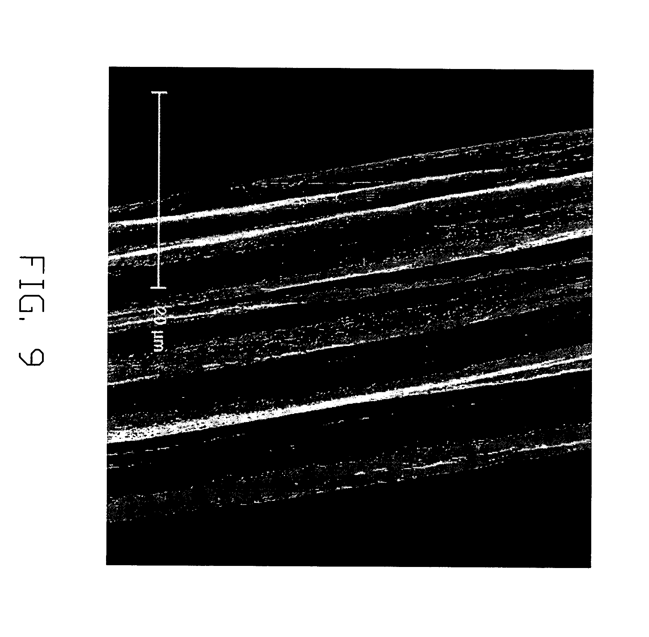

Referring to FIG. 9, the non-twisted carbon nanotube wire includes a plurality of carbon nanotubes substantially oriented along a same direction (i.e., a direction along the length of the non-twisted carbon nanotube wire). The carbon nanotubes are parallel to the axis of the non-twisted carbon nanotube wire. The carbon nanotubes in the non-twisted carbon nanotube wire are joined end to end by van der Walls attractive force therebetween. More specifically, the non-twisted carbon nanotube wire includes a plurality of successive carbon nanotube treated segment joined end to end by van der Waals attractive force therebetween. Each carbon nanotube treated segment includes a plurality of carbon nanotubes substantially parallel to each other, and combined by van der Waals attractive force therebetween. The carbon nanotube treated segments can vary in width, thickness, uniformity and shape. Length of the non-twisted carbon nanotube wire can be arbitrarily set as desired. A diameter of the non-twisted carbon nanotube wire is from about 0.5 nanometers to about 400 micrometers.

The twisted carbon nanotbue wire is formed by twisting a carbon nanotube film by using a mechanical force to turn the two ends of the carbon nanotube film in opposite directions.

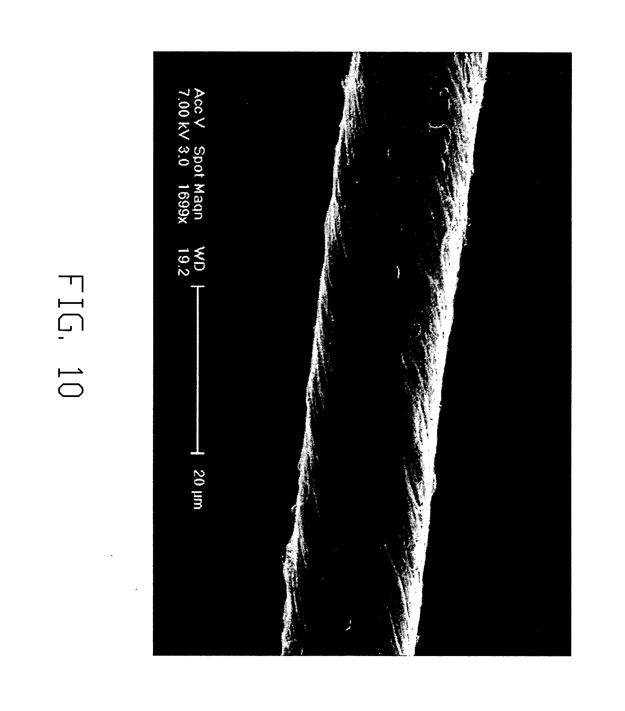

Referring to FIG. 10, the twisted carbon nanotube wire includes a plurality of carbon nanotubes oriented around an axial direction of the twisted carbon nanotube wire. The carbon nanotubes are aligned around the axis of the carbon nanotube twisted wire like a helix. More specifically, the twisted carbon nanotube wire includes a plurality of successive carbon nanotubes joined end to end by van der Waals attractive force therebetween. Length of the carbon nanotube wire can be arbitrarily set as desired. A diameter of the twisted carbon nanotube wire is in an approximate range from 0.5 nanometers to 400 micrometers.

Further, the twisted carbon nanotube wire can be treated with a volatile organic solvent. After being soaked by the organic solvent, the adjacent paralleled carbon nanotubes in the twisted carbon nanotube wire will bundle together, due to the surface tension of the organic solvent when the organic solvent volatilizing. The specific surface area of the twisted carbon nanotube wire will decrease. The density and strength of the twisted carbon nanotube wire will increase.

The strip-shaped carbon nanotube film is the carbon nanotube film drawn from the super-aligned carbon nanotube array having relatively narrow width (e.g., from about 0.5 nanometers to 400 microns).

Here, all the first conductive lines 412 and the second conductive lines 422 are carbon nanotube wire-like structures, and each of the carbon nanotube wire-like structures is formed by one carbon nanotube wire.

It is to be understood that the carbon nanotube wire-like structure or the strip-shaped carbon nanotube film provides superior toughness, high mechanical strength, and is easy to bend. As such, the first conductive lines 412 and the second conductive lines 422 formed with the carbon nanotube wire-like structure or strip-shaped carbon nanotube film can be used with flexible substrates to form a flexible touch panel.

The first conductive lines 412 are connected to the capacitive sensing circuit 450. The capacitive sensing circuit 450 continuously senses all of the capacitance changes on the first conductive lines 412. The second conductive lines 422 are connected to a driving circuit 452 (not shown). In the present embodiment, the driving circuit is disposed on an edge or corner of the touch panel 400 and connected to the second conductive lines 422. It is to be understood, the second conductive lines 422 can be connected to the driving circuit 452 through outer conductive wires. In this condition, the driving circuit 452 can be set outside the touch panel 400. The driving circuit 452 separately and alternately drives the current through each of the second conductive lines 422. When one second conductive line 422 is driven, all the other second conductive lines 422 are grounded. In this way, the driving circuit 452 alternately scans the second conductive lines 422. A plurality of coupling capacitances are formed by the spatial intersections of the first conductive lines 412 and the second conductive lines 422. In use, when an upper surface of the touch panel is pressed/touched with one or several touch tools, such as an electrical pen or user's fingers, the coupling capacitances are changed. Due to the quick scan of the driving circuit, the capacitive changes on the first conductive lines 412 can be readily detected.

The capacitive sensing circuit 450 typically includes one or more integrated chips (ICs) used as sensors. The ICs measure the capacitance on the first conductive lines 412 and record the positions of the first conductive lines 412 with capacitive changes. The capacitive sensing circuit 450 is disposed on an edge or corner of the touch panel 400 and connected to the first conductive lines 412. In the second embodiment, the capacitive sensing circuit 450 is disposed on one side of the first surface 432 of the first substrate 430. It is to be understood, the first conductive lines 412 can be connected to the capacitive sensing circuit 450 through outer conductive wires. In this condition, the capacitive sensing circuit 450 can be set outside the touch panel 400.

The capacitive sensing circuit 450 and the driving circuit 452 can be connected together by an outer conductive wire (not shown). The driving circuit 452 reports the position of the second conductive line 422 currently being scanned to the capacitive sensing circuit 450. As such, the capacitive sensing circuit 450 can get the positions of both the first conductive lines 412 and the second conductive lines 422. And accordingly, the capacitive sensing circuit 450 can get the coordinates of the position with capacitive changes.

The gaps between the adjacent first and second conductive lines 412, 422 do not have the same optical index as the first and second conductive lines 412, 422. As such, a filling layer 460 can be further provided and formed in the gaps between the first and second conductive lines 412, 422, to improve the visual appearance of the touch panel 400. The filling layer 460 is formed of an insulative material with similar optical index as the first and second conductive lines 412, 422.

Additionally, in order to prolong operational life span and restrict coupling capacitances of the touch panel 400, a transparent protective layer 470 can be disposed on the second conductive layer 420. The transparent protective layer 470 can receive a surface hardening treatment to protect the second conductive layer 420 from being scratched when in use. The transparent protective layer 470 can be adhered to the second conductive layer 420 or combined with the second conductive layer 420 by a hot-pressing method. The material of the transparent protective layer 470 can be the same as the material of the transparent protective layer 150 in the first embodiment.

Here, the material of the transparent protective layer 470 is PET. The hardness and thickness of the transparent protective layer 470 are selected according to practical needs. The transparent protective layer 470 is adhered to the second conductive layer 420.

The touch panel 400 can further include a shielding layer 480 disposed on the second surface 434 of the first substrate 430. The material and structure of the shielding layer 480 can be the same as the material and structure of the shielding layer 170 in the first embodiment.

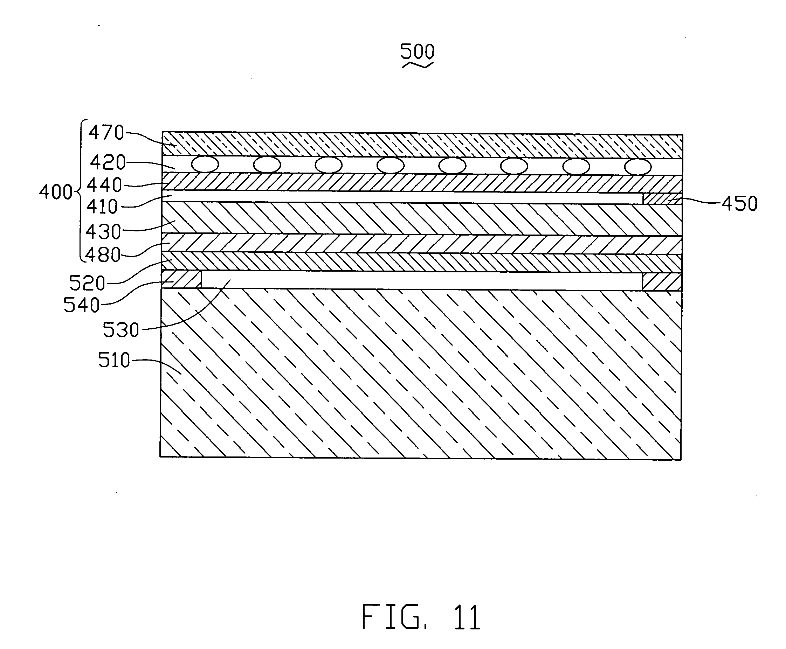

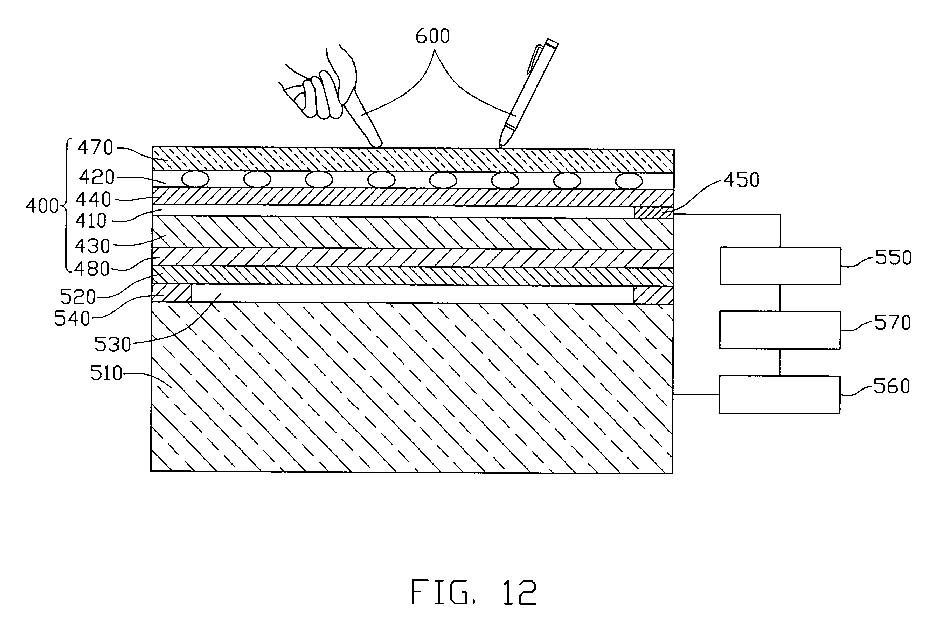

Referring to FIG. 11 and FIG. 12, a display device 500 includes the touch panel 400, a display element 510, a touch panel controller 550, a central processing unit (CPU) 570, and a display element controller 560. The second surface 434 of the first substrate 430 of the touch panel 400 is opposite and adjacent to the display element 510. The touch panel 400 can be spaced from the display element 510 or installed on the display element 510. The touch panel 400 is connected to the touch panel controller 550 by an external circuit. The touch panel controller 550, the CPU 570 and the display element controller 560 are electrically connected. The CPU 570 is connected to the display element controller 560 to control the display element 510.

The display element 510 can be, e.g., a conventional display such as a liquid crystal display, field emission display, plasma display, electroluminescent display, vacuum fluorescent display, cathode ray tube, or another display device, or a flexible display such as an e-paper (i.e., a microencapsulated electrophoretic display), a flexible liquid crystal display, a flexible organic light emitting display (OLED), or any other flexible display.

When the shielding layer 480 is disposed on the second surface 434 of the first substrate 430, a passivation layer 520 is disposed on a surface of the shielding layer 480 that faces away from the first substrate 430. The material of the passivation layer 520 can, opportunely, be selected from a group consisting of silicon nitride, silicon dioxide, benzocyclobutenes, polyesters, acrylic resins, polyethylene terephthalate, and any combination thereof. The passivation layer 520 can be spaced from the display element 510 or can be directly installed on the display element 510. When the passivation layer 520 is spaced at a distance from the display element 510, two or more spacers 240 can be used. Thus, a gap 230 is provided between the passivation layer 520 and the display element 510. The passivation layer 520 protect the shielding layer 480 from chemical damage (e.g., humidity of the surrounding) or mechanical damage (e.g., scratching during fabrication of the touch panel).

In operation, an upper surface of the touch panel 400 is pressed or touched with one or several touch tools 600, such as an electrical pen or user's fingers. The capacitive sensing circuit 450 reports the capacitive changes and the position coordinates according to the capacitive sensing nodes having the capacitive changes to the touch panel controller 550. The touch panel controller 550 converts the analog capacitive changes and the position coordinates to digital data. The CPU receives the digital data and sends commands to display element controller 560 to control the display element 510 accordingly. More specifically, capacitances exist at the sensing nodes. When a user touches a node, due to an electrical field of the user, the touch tools 600 take away little currents from the touch points. That is, the coupling capacitance between the touch tool 600 and the transparent conductive layer 420 disturbs the capacitance at the sensing nodes. Currents flowing through the capacitive sensing circuit 450 cooperatively replace the currents lost at the touch points. The position coordinates of the touch points can be simultaneously identified by the integrated circuit of the capacitive sensing circuit 450.

The carbon nanotube wire-like structure and strip-shaped carbon nanotube film provided in the second embodiment has superior properties, such as excellent toughness and high mechanical. Thus, the touch panel 400 and the display device 500 using the same are durable and highly reliable. Accordingly, the flexible touch panel can be formed and used in a flexible display device. Further, the pulling method for fabricating each carbon nanotube wires and each strip-shaped carbon nanotube film is simple, and the adhesive carbon nanotube wire and strip-shaped carbon nanotube film can be disposed on the substrate directly. As such, the method for fabricating the carbon nanotube wires and strip-shaped carbon nanotube films is suitable for the mass production of touch panels and display devices using the same and reduces the costs thereof. Furthermore, the carbon nanotube wire-like structures and strip-shaped carbon nanotube films have a high transparency, thereby promoting improved brightness of the touch panel and the display devices using the same. Additionally, since the carbon nanotubes have excellent electrical conductivity properties, the carbon nanotube wire-like structures and strip-shaped carbon nanotube films formed by a plurality of carbon nanotubes have a uniform resistance distribution. Thus the touch panel and the display device adopting the carbon nanotube wire-like structures and strip-shaped carbon nanotube films have improved sensitivity and accuracy.

Finally, it is to be understood that the above-described embodiments are intended to illustrate rather than limit the invention. Variations may be made to the embodiments without departing from the spirit of the invention as claimed. The above-described embodiments illustrate the scope of the invention but do not restrict the scope of the invention.

## Claims

1. A touch panel comprising:
a plurality of capacitive sensing elements sensing multiple touch positions on the touch panel at a same time, wherein at least one of the capacitive sensing elements comprises a carbon nanotube structure.

2. A touch panel as claimed in claim 1 comprising:
a substrate comprising a surface,
wherein the plurality of capacitive sensing elements is a plurality of transparent conductive layers disposed on the surface of the substrate and spaced apart from each other, wherein at least one of the plurality of transparent conductive layers comprises a carbon nanotube structure, wherein the carbon nanotube structure comprises a carbon nanotube layer;
at least one capacitive sensing circuit; and
a plurality of conductive wires respectively electrically connecting the plurality of transparent conductive layers to the at least one capacitive sensing circuit.

3. A touch panel as claimed in claim 2, wherein the carbon nanotube layer comprises a carbon nanotube film or a plurality of coplanar or stacked carbon nanotube films.

4. A touch panel as claimed in claim 3, wherein the carbon nanotube film comprises a plurality of uniformly distributed carbon nanotubes disorderly or orderly arranged.

5. A touch panel as claimed in claim 3, wherein a thickness of the carbon nanotube film is in the range about 0.5 nanometers to about 400 microns.

6. A touch panel as claimed in any of claims 2 to 5, wherein the conductive wires are carbon nanotube wire-like structures or strip-shaped carbon nanotube films.

7. A touch panel as claimed in claim 1 comprising:
a first conductive layer comprising some of the plurality of capacitive sensing elements used as a plurality of first conductive lines;
a second conductive layer separated from the first conductive layer and comprising the other of the plurality of capacitive sensing elements used as a plurality of second conductive lines, wherein the plurality of first conductive lines is located above the plurality of second conductive lines;
a capacitive sensing circuit connected to the plurality of first conductive lines,
wherein at least one of the plurality of the first conductive lines and the plurality of the second conductive lines comprises a carbon nanotube structure, wherein the carbon nanotube structure comprises a plurality of carbon nanotubes.

8. A touch panel as claimed in claim 7, wherein the carbon nanotube structure is a carbon nanotube wire-like structure or a strip-shaped carbon nanotube film, wherein the carbon nanotube wire-like structure comprises at least one carbon nanotube wire, wherein a diameter of the carbon nanotube wire is in the range about 0.5 nanometers to about 400 microns and a width of the strip-shaped carbon nanotube film is in the range about 0.5 nanometers to about 400 microns.

9. A touch panel as claimed in claim 8, wherein the carbon nanotube wire-like structure is non-twisted or twisted and comprises a plurality of carbon nanotube wires.

10. A touch panel as claimed in either claim 8 or 9, wherein the carbon nanotube wire is non-twisted or twisted.

11. A touch panel as claimed in any of claims 7 to 9 further comprising a first substrate and a second substrate adjacent to the first substrate, wherein the first conductive layer is disposed on a first surface of the first substrate, wherein the second substrate is disposed on the first conductive layer and the second conductive layer is disposed on the second substrate.

12. A touch panel as claimed in any of claims 3 to 11, wherein the carbon nanotube film or carbon nanotube wire-like structure is obtained by drawing from a carbon nanotube array, wherein the carbon nanotubes in the carbon nanotube film or carbon nanotube wire-like structure are joined end to end by Van der Waals attractive forces.

13. A touch panel as claimed in any preceding claim further comprising a filling layer located in a space by the capacitive sensing elements, wherein the filling layer is formed of a material with similar optical index as the capacitive sensing elements.

14. A display device comprising:
a touch panel comprising a plurality of capacitive sensing elements sensing multiple touch positions on the touch panel at a same time, wherein each of the capacitive sensing elements comprises a carbon nanotube structure; and
a display element opposite and adjacent to the touch panel.

15. A display device as claimed in claim 14, wherein the carbon nanotube structure comprises at least one carbon nanotube film or at least one carbon nanotube wire.
